# EUROPÄISCHE PATENTSCHRIFT

(11) **EP 2 759 238 B1**
(45) Veröffentlichungstag und Bekanntmachung des Hinweises auf die Patenterteilung: **16.11.2016**
(21) Anmeldenummer: 14151648.4
(22) Anmeldetag: 17.01.2014
(51) Int. Cl.: A47J 31/60, A47J 31/46

(54) **Kaffeevollautomat mit Zusatzelement**
Fully automatic coffee machine with extra element
Machine à café entièrement automatique avec élément supplémentaire

(30) Priorität: 24.01.2013 DE 102013201119
(43) Veröffentlichungstag der Anmeldung: 30.07.2014
(73) Patentinhaber: BSH Hausgeräte GmbH, 81739 München (DE)
(72) Erfinder: Hauser, Andreas, 83352 Altenmarkt (DE); Mathes, Anton, 83364 Neukirchen am Teisenberg (DE); Ostermaier, Albert, 83371 Stein a.d. Traun (DE)

(56) Entgegenhaltungen:
- EP-A1- 2 147 621
- EP-A1- 2 428 143
- FR-A1- 2 856 572

## Beschreibung

Die Erfindung betrifft einen Kaffeevollautomaten gemäß Oberbegriff des Anspruchs 1.

Brühkammern sind in Bezug auf Entkalkungsmittel sehr empfindlich, da deren Säuren die Brühkammerwandungen angreifen und beschädigen. Daher wird der Entkalkungsvorgang bei vielen Kaffeevollautomaten mittels eines aufwändigen Ventilsystems auf die Bereiche beschränkt, die innerhalb des Fluidsystems der Maschine vor der Brühkammer angeordnet sind. Insbesondere die Ableitung aus der Brühgruppe mit dem Kaffeeauslauf bleibt so generell ohne die entsprechende Entkalkung. Dies ist besonders in Regionen mit sehr kalkhaltigem Wasser von Nachteil. Die Druckschrift FR-A-2 856 572 offenbart einen Kaffeevollautomat mit einem Wassertank, einer Pumpe, einer Brühgruppe, einer Zuleitung zur Brühgruppe, eine Ableitung aus der Brühgruppe und einem Kaffeeauslauf. Eine fest installierte Bypass- Leitung bildet eine fluidische Verbindung zwischen der Zuleitung der Brühgruppe und der Ableitung aus der Brühgruppe. Auch die Druckschriften EP-A- 2 428 143 und EP-A-2 147 621 offenbaren Bypass-Leitungen zwischen der Zuleitung zur
Brühgruppe und der Ableitung aus der Brühgruppe. Die Ventilsysteme sind teuer in der Herstellung. Alternativ werden spezielle Entkalkungsmittel auf Milchsäure-Basis angeboten, die in ihrer Wirkung herkömmlichen Entkalkungsmitteln nachstehen, weil sie die Brühkammer nicht angreifen, aber im Verhältnis ungleich teurer sind. Sie werden statt in einer bequem handhabbaren Tablettenform in einer auch im Versand aufwändigeren Flasche abgegeben.

Der vorliegenden Erfindung liegt daher die Aufgabe zugrunde, einen Kaffeevollautomaten zur Verfügung zu stellen, bei dem möglichst alle Teile des Fluidsystems durch Entkalkungsmittel einer Entkalkung unterzogen werden können.

Diese Aufgabe wird durch einen Kaffeevollautomaten gemäß Anspruch 1 gelöst. Die Brühgruppe ist für einen Entkalkungsvorgang entnehmbar und durch ein Zusatzelement ersetzbar, um bei der Entkalkung eine fluidische Verbindung von den Teilen des Fluidsystems, die im Wasserkreislauf vor bzw. stromauf der Brühgruppe angeordnet sind, mit den Teilen des Fluidsystems herzustellen, die der Brühgruppe nachgeordnet bzw. stromab angeordnet sind. Für das Einsetzen des Zusatzelements muss die Brühkammer ggf. nicht vollständig entnommen werden, sondern jedenfalls nur soweit, dass das Zusatzelement an die Zuleitung und an die Ableitung angeschlossen werden kann. Das Zusatzelement bildet folglich einen Bypass oder Ersatz an derjenigen Stelle, an der im Zubereitungsbetrieb die Zubereitungskammer sitzt. Dadurch kann auf ein kompliziertes Ventilsystem verzichtet werden. Insbesondere der Kaffeeauslauf kann vom Entkalkungsmittel erfasst, mit höheren Fließgeschwindigkeiten beaufschlagt und dadurch vollständig gereinigt werden, was direkte positive Auswirkungen auf die Qualität des Kaffees hat. Zur Lösung der Aufgabe trägt auch das Zusatzelement gemäß Anspruch 9 bei, das einen Bypass anstelle der Brühkammer bildet. Weitere Ausgestaltungen des Kaffeevollautomaten sind in den abhängigen Ansprüchen 2 bis 8 beschrieben.

Die Erfindung lässt sich darüber hinaus vorteilhaft bei einfachen Kaffeevollautomaten einsetzten, die mangels Milchschaumdüse oder dergleichen über kein oder kein aufwändiges Mehrfachventil bzw. Ventilsystem stromab einer Heizeinrichtung zum Umschalten zumindest zwischen einer Fluidzufuhr zum Kaffeeauslauf oder zur Milchschaumdüse verfügen. Es dient nämlich u.a. beim sog. Primen des Fluidsystems, einem Wiederbefüllen des Fluidsystems nachdem es Luft gezogen hat, einem gegendrucklosen Wiederbefüllen, indem es druckbelastete Bereiche wie die Brühkammer zunächst aus dem Pumpvorgang zum Wiederbefüllen ausschaltet. Nach Entnahme der Brühkammer und Einsetzen des erfindungsgemäßen Bypasses aber herrschen drucklose Verhältnisse im gesamten Fluidsystem, so dass ein eigenes Ventil für das Primen entfallen kann. Damit kann auch bei einfacher ausgestatteten Kaffeevollautomaten ohne zusätzlichen Aufwand ein Primen vorgenommen werden.

In einer vorteilhaften Ausgestaltungsform der Erfindung besitzt der Kaffeevollautomat eine Aufnahmevorrichtung zur Aufnahme des Zusatzelements. Dadurch kann es am Kaffeevollautomaten aufbewahrt werden, wenn es nicht im Einsatz ist, und steht für seinen Einsatz jederzeit zur Verfügung. Die Wahrscheinlichkeit, dass es verlegt wird oder verloren geht, ist damit reduziert. Prinzipiell kann die Aufnahmevorrichtung an jedem beliebigen Ort innerhalb des Gehäuses oder daran angeordnet sein. Von Vorteil ist es, wenn das Zusatzelement innerhalb der Aufnahmeöffnung untergebracht, in der auch die Brühkammer angeordnet ist, oder beim Öffnen einer entsprechenden Servicetüre am Gehäuse des Kaffeevollautomaten freigelegt wird. Damit wird dem Nutzer ein kausaler Zusammenhang zwischen der Entnahme der Brühkammer einerseits und dem Einsetzen des Zusatzelements andererseits vermittelt, so dass die Bedienung des Kaffeevollautomaten in dieser Hinsicht leichter fällt.

Erfindungsgemäß weist das Zusatzelement Kopplungselemente auf, die nach Entnahme der Brühgruppe eine Kopplung an eine fluidische Zuleitung zur Brühgruppe und eine Ableitung von der Brühgruppe ermöglichen. Das Zusatzelement weist also dieselben Kopplungselemente auf wie auch die Brühgruppe, damit keine separaten Anschlüsse für das Zusatzelement erforderlich werden. Ein schnelles Aufstecken oder Einrasten des Zusatzelements an den Kopplungspunkten an der Zuleitung und der Ableitung ermöglicht eine konstruktiv einfache Ausbildung. Zudem kann durch eine derartige Kopplung eine Verbindung geschaffen werden, die auch einem Beaufschlagen des Fluidsystems durch Druck wie während eines Zubereitungsvorgangs standhält.

In einer vorteilhaften Ausgestaltungsform der Erfindung ist das Zusatzelement derart verlagerbar am Kaffeevollautomaten aufgenommen, dass es in einer Nutzungsposition die Zuleitung und die Ableitung fluidisch verbindet und in einer Ruheposition ohne Verbindung zumindest zur Zuleitung verbleibt. Die Verlagerung kann durch z.B. Klappen, Verschieben oder Verschwenken erfolgen, was Scharniere, Verschiebeschienen oder Gelenke am Zusatzelement ermöglichen können. So kann gewährleistet werden, dass beim Aufsetzen des Zusatzelementes auf die Zuleitung und die Ableitung keine Bedienungsfehler passieren, da eine diskrete Aufnahme bzw. Lagerung ein immer gleichartiges Aufsetzen des Zusatzelements erzwingt. Fehlbedienungen können dadurch ausgeschlossen werden.

Nach einer weiteren vorteilhaften Ausgestaltung der Erfindung kann das Zusatzelement in der oben genannten Weise unmittelbar an der Brühgruppe gelagert sein. Dazu können an ihr die Scharniere, Verschiebeschienen oder Gelenke angebracht sein, die ein Verschieben oder Verschwenken des Zusatzelements gegenüber der Brühgruppe ermöglichen. Nach der Entnahme der Brühgruppe wird das Zusatzelement dann von seiner Ruheposition in seine Nutzungsposition verlagert, und anschließend die Brühgruppe wieder in das Gehäuse eingesetzt. Da jetzt das Zusatzelement eine andere, nämlich die Nutzungsposition einnimmt, kann die Brühgruppe nicht vollständig bzw. wie in ihrer Zubereitungsposition eingesetzt werden. Sie dient jetzt aber quasi als Montagehilfe zum korrekten Einsetzen des Zusatzelements. Damit kann diese Servicetätigkeit für den Benutzer einfacher gestaltet werden.

Nach einer weiteren vorteilhaften Ausgestaltung der Erfindung kann für den Wechsel des Zusatzelements zwischen einer Ruhe- und einer Nutzungsposition ein elektrischer Antrieb vorgesehen sein. Die Bedienung des Kaffeevollautomaten wird so für den Nutzer noch bequemer, da er für den Entkalkungsprozess abgesehen von der Entnahme der Brühgruppe keine weiteren manuellen Tätigkeiten verrichten muss.

In einer weiteren vorteilhaften Ausgestaltungsform verfügt der Kaffeevollautomat zusätzlich zum elektrischen Antrieb für den Wechsel des Zusatzelements zwischen Ruhe und Nutzungsposition über eine Steuereinrichtung. Sie kann z. B. nach Entnahme der Brühgruppe und dem Starten des Entkalkungsvorganges den Positionswechsel des Zusatzelements automatisch erfolgen lassen bzw. bei einer Fehlbedienung einen entsprechenden Warnhinweis geben und den Entkalkungsvorgang unterbinden.

Nach einer weiteren vorteilhaften Ausgestaltung der Erfindung verfügt der Kaffeevollautomat über ein Detektionsmittel, das erkennt, ob das Zusatzelement in den Kaffeevollautomaten insbesondere in seiner Nutzungsposition korrekt eingesetzt ist. Die Steuereinrichtung kann so ausgelegt sein, dass sie nur nach Feststellung bzw. Detektion des korrekt eingesetzten Zusatzelements den Entkalkungsvorgang zulässt. Anderenfalls kann sie ein Warnsignal ausgeben. Dadurch kann die Steuereinrichtung in Verbindung mit dem oder den Detektionsmittel(n) den Entkalkungsvorganges sicherer gestalten. Ggf. kann auch die korrekte Ruheposition detektiert werden und der Benutzer so zum Einsetzen der Brühgruppe aufgefordert werden.

In einer weiteren vorteilhaften Ausgestaltungsform der Erfindung des Kaffeevollautomaten sind Schaltmittel vorgesehen, die nach dem bzw. aufgrund des Einsetzen(s) des Zusatzelements in den Kaffeevollautomaten den Entkalkungsvorgang starten. Damit stellt das Zusatzelement quasi einen Einschalter für das Entkalkungsprogramm dar, das ggf. erst nach Vorliegen weiterer Voraussetzungen, beispielsweise einer eingesetzten Brühgruppe, gestartet wird. Auch diese Ausgestaltung trägt zum Komfort für den Nutzer bei, da er keinen separaten Einschaltvorgang für das Entkalken vornehmen muss, ein Betätigungsschritt also entfallen kann.

Das erfindungsgemäße Zusatzelement, das zum Einsetzen in Kaffeevollautomaten mit einer entnehmbaren Brühgruppe, einer Zuleitung zur Brühgruppe und einer Ableitung aus der Brühgruppe vorgesehen ist, verfügt über Kopplungsmittel für einen fluiddichten Anschluss an die Zuleitung zur Brühgruppe und an ihre Ableitung. Dabei ist das Zusatzelement hinsichtlich seiner Abmessungen und der Koppelungstechnologie an die Verhältnisse der einzelnen Typen von Kaffeevollautomaten jeweils individuell anzupassen. In einer flexiblen Form als Schlauch ist aber auch die Verwendung eines standardisierten Elements für verschiedene Typen denkbar.

Das Prinzip der Erfindung wird im Folgenden anhand von Zeichnungen beispielshalber noch näher erläutert. In der Zeichnung zeigen:
- Figur 1:: das Fluidsystem eines Kaffeevollautomaten mit Kopplungspunkten für das erfindungsgemäße Zusatzelement,
- Figur 2:: das Fluidsystem eines Kaffeevollautomaten mit erfindungsgemäßem, eingesetztem Zusatzelement,
- Figur 3:: ein erfindungsgemäßes Zusatzelement,
- Figur 4:: einen Kaffeevollautomaten mit entnommener Brühgruppe und
- Figur 5:: einen Kaffeevollautomaten mit eingesetztem Zusatzelement.

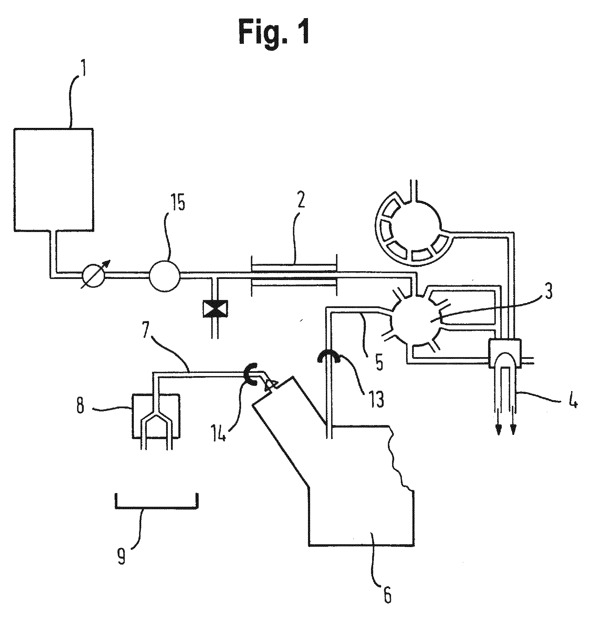

Fig. 1 zeigt ein schematisiertes Fluidsystem eines Kaffeevollautomaten. Bei einer Getränkezubereitung pumpt eine Pumpe 15 Wasser aus dem Wassertank 1 entnommen und entlang eines Heizelements 2 geführt, das das Wasser erwärmt. Über ein Mehrfachventil 3 wird das Wasser je nach Anforderung zu einer Dampfdüse 4 oder in Richtung eines Kaffeeauslaufs 8 mit einer Tropfschale 9 darunter geleitet. Für die Kaffeezubereitung passiert das erhitze Wasser eine Brühgruppe 6, die fluidisch zwischen einer Zuleitung 5 und einer Ableitung 6 angeordnet ist. Zu Reinigungszwecken lässt sich die Brühgruppe 6 entnehmen. Dazu kann sie an einem ersten Koppelungspunkt 13 von ihrer Zuleitung 5 und an einem zweiten Koppelungspunkt 14 von ihrer Ableitung 7 getrennt werden. Bei einem Entkalkungsvorgang unter Ausschluss der Brühgruppe 6 nach dem Stand der Technik würde das Mehrfachventil 3 die Weiterleitung eines Entkalkungsmittels über die Zuleitung 5 zur Brühgruppe 6 verhindern. Insbesondere die Ableitung 7 und der Kaffeeauslauf 8 blieben von der Reinigung ausgeschlossen.

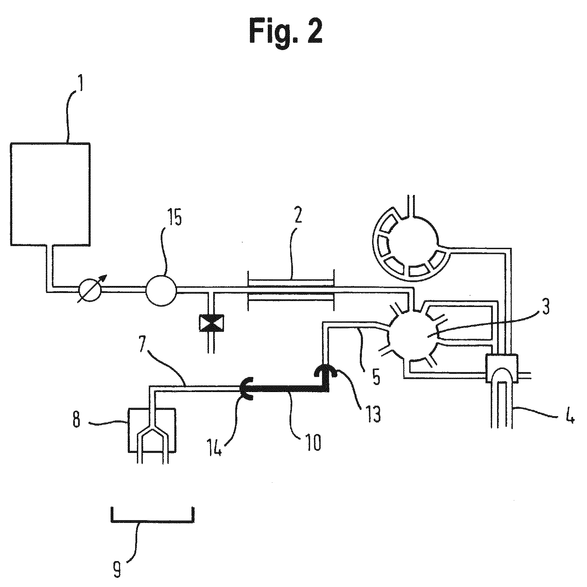

Erfindungsgemäß wird gemäß Figur 2 zur Entkalkung des Kaffeevollautomaten die Brühgruppe 6 entnommen und statt ihrer ein Zusatzelement 10 eingefügt, das die entnommene Brühgruppe 6 (vgl. Figur 1) ersetzt. Das gesamte Fluidsystem vom Wassertank 1 über das Heizelement 2, das Mehrfachventil 3, die Zuleitung 5 und die Ableitung 7 bis zum Kaffeeauslauf 8 kann nun der Entkalkung unterzogen werden. Das Zusatzelement 10 ist dazu am ersten Kopplungspunkt 13 mit der Zuleitung 5 und am zweiten Kopplungspunkt 14 mit der Ableitung 7 verbunden und vervollständigt somit das Fluidsystem.

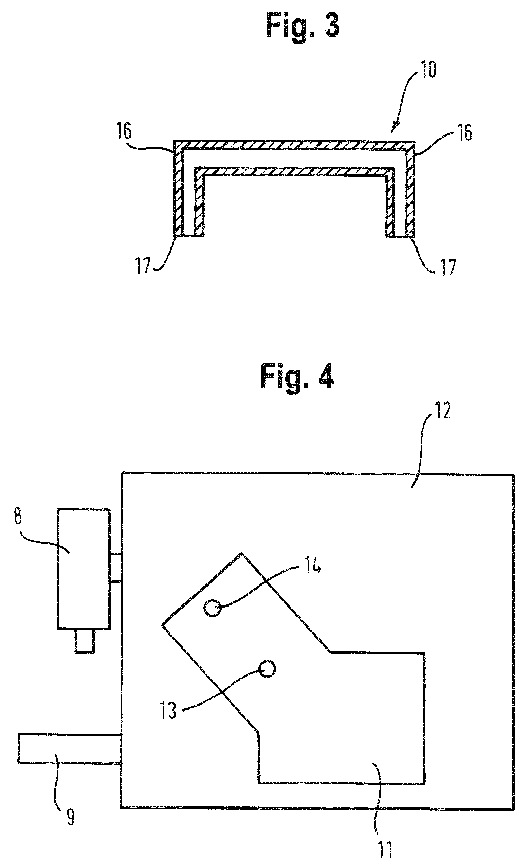

In Fig. 3 ist ein Zusatzelement 10 dargestellt. Es handelt sich in dieser Ausführungsform um ein starres Rohr, das durch zwei über rechtwinklige Abwinkelungen 16 in die gleiche Richtung zeigende Rohrenden 17 an den Koppelungspunkten 13, 14 (vgl. Figuren 1, 2) auf die Zuleitung 5 und die Ableitung 7 aufgeschoben werden kann. Das Zusatzelement 10 ist aus Kunststoff hergestellt, der gegen das Entkalkungsmittel widerstandsfähig ist.

Fig. 4 zeigt einen stark schematisierten Kaffeevollautomaten 12 mit dem Kaffeeauslauf 8 und der darunter liegenden Tropfschale 9 sowie mit einer Aufnahmeöffnung 11, aus der die Brühgruppe 6 entnommen wurde. In der Aufnahmeöffnung 11 sind der erste Kopplungspunkt 13 und der zweite Kopplungspunkt 14 zu erkennen, an die die Brühgruppe 6 beim Einsetzen in die Aufnahmeöffnung 11 fluidisch anschließt. Nach Entnahme der Brühgruppe 6 liegen die Kopplungspunkte 12, 13 offen und können mit Hilfe des Zusatzelements 10 überbrückt werden.

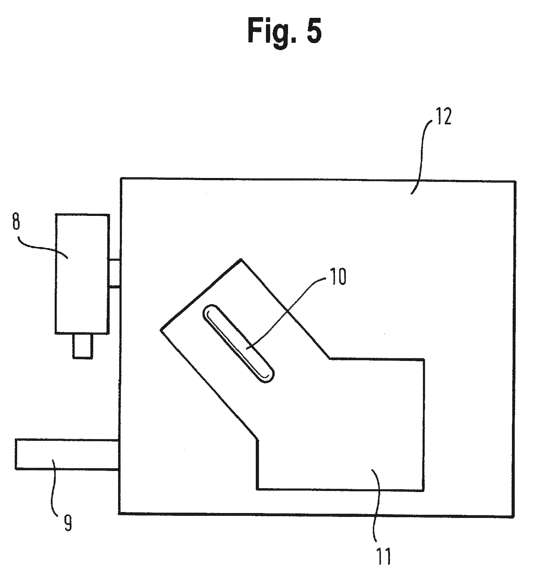

Der in Fig. 4 abgebildete Kaffeevollautomat 12 ist in Fig. 5 um das Zusatzelement 10 ergänzt worden, indem es auf die Koppelungspunkte 13, 14 aufgesteckt wurde. Wasser zur Entkalkung des Systems kann nun durch das Zusatzelement hindurch auch durch den Kaffeeauslauf 8 fließen und von einem auf der Tropfschale 9 aufgestellten Gefäß aufgenommen werden. So wird auch der Teil des Fluidsystems des Kaffeevollautomaten 12 gereinigt, der stromab der Brühgruppe 6 liegt.

Da es sich bei dem vorhergehenden, detailliert beschriebenen Kaffeevollautomaten mit Zusatzelement um ein Ausführungsbeispiel handelt, kann er in üblicher Weise vom Fachmann in einem weiten Umfang modifiziert werden, ohne den Bereich der Erfindung zu verlassen. Insbesondere kann die Gestaltung des Zusatzelements anders ausfallen, wenn die Koppelungspunkte sich in einer anderen Lage zueinander befinden. Ebenso kann die Ausgestaltung der Befestigung des Zusatzelements am Kaffeevollautomaten oder einem seiner Bauteile in einer anderen Form vorgenommen werden, wenn dies z. B. aus Platz- oder designerischen Gründen notwendig ist.

### Bezugszeichenliste

- 1: Wassertank
- 2: Heizelement
- 3: Wasserleitungsventil
- 4: Milchauslauf
- 5: Zuleitung zur Brühgruppe 6
- 6: Brühgruppe
- 7: Ableitung aus der Brühgruppe 6
- 8: Kaffeeauslauf
- 9: Tropfschale
- 10: Zusatzelement
- 11: Aufnahmeöffnung
- 12: Kaffeevollautomat
- 13: erster Kopplungspunkt
- 14: zweiter Kopplungspunkt
- 15: Pumpe
- 16: Abwinkelung
- 17: Rohrende

## Patentansprüche

1. Kaffeevollautomat (12) mit einem Wassertank (1), einer Pumpe, einer Brühgruppe (6), einer Zuleitung (5) zur Brühgruppe (6), einer Ableitung (7) aus der Brühgruppe (6), einem Kaffeeauslauf (8) und einem Zusatzelement (10), das anstelle der Brühgruppe (6) eine fluidische Verbindung zwischen der Zuleitung (5) zur Brühgruppe (6) und der Ableitung (7) aus der Brühgruppe (6) bildet, **gekennzeichnet durch** Kopplungsmittel am Zusatzelement (10), so dass es bei entnommener Brühgruppe (6) an die Zuleitung (5) und an die Ableitung (7) ankoppelbar ist.

2. Kaffeevollautomat (12) nach Anspruch 1, **gekennzeichnet durch** eine Aufnahmevorrichtung für das Zusatzelement (10) in einem Gehäuse des Kaffeevollautomaten (12).

3. Kaffeevollautomat (12) nach einem der vorhergehenden Ansprüche, **dadurch gekennzeichnet, dass** das Zusatzelement (10) im Kaffeevollautomaten (12) derart verlagerbar aufgenommen ist, dass es in einer Nutzungsposition die Zuleitung (5) und die Ableitung (7) fluidisch verbindet und in einer Ruheposition ohne Verbindung zu Zuleitung (5) oder Ableitung (7) verbleibt.

4. Kaffeevollautomat (12) nach einem der vorhergehenden Ansprüche, **gekennzeichnet durch** Mittel zum manuellen Wechsel zwischen der Ruheposition und der Nutzungsposition.

5. Kaffeevollautomat (12) nach einem der Ansprüche 1 bis 4, **gekennzeichnet durch** einen elektrischen Antrieb für den Wechsel zwischen der Ruheposition und der Nutzungsposition.

6. Kaffeevollautomat (12) nach dem vorhergehenden Anspruch, **gekennzeichnet durch** eine Steuereinrichtung für einen automatischen Wechsel zwischen Ruheposition und Nutzungsposition.

7. Kaffeevollautomat (12) nach einem der obigen Ansprüche, **gekennzeichnet durch** Detektionsmittel für das eingesetzte Zusatzelement (10).

8. Kaffeevollautomat (12) nach einem der Ansprüche 1 bis 6, **gekennzeichnet durch** Schaltmittel, die nach dem Einsetzen des Zusatzelementes (10) einen Entkalkungsvorgang einleiten.

9. Zusatzelement (10) ausgebildet zum Einsetzen in Kaffeevollautomaten (12) mit einer entnehmbaren Brühgruppe (6), einer Zuleitung (5) zur Brühgruppe (6) und einer Ableitung (7) aus der Brühgruppe (6) nach einem der Ansprüche 1 bis 8, **gekennzeichnet durch** Kopplungsmittel ausgebildet zum Verbinden mit der Zuleitung (5) und mit der Ableitung (7).

## Claims

1. Fully automatic coffee machine (12) having a water tank (1), a pump, a brewing unit (6), a feed line (5) to the brewing unit (6), a drainage line (7) from the brewing unit (6), a coffee outlet (8) and an extra element (10), which, in place of the brewing unit (6), forms a fluidic connection between the feed line (5) to the brewing unit (6) and the drainage line (7) from the brewing unit (6), **characterised by** coupling means on the extra element (10), so that when the brewing unit (6) is removed, said extra element can be coupled to the feed line (5) and to the drainage line (7).

2. Fully automatic coffee machine (12) according to claim 1, **characterised by** a mounting apparatus for the extra element (10) in a housing of the fully automatic coffee machine (12).

3. Fully automatic coffee machine (12) according to one of the preceding claims, **characterised in that** the extra element (10) is movably mounted in the fully automatic coffee machine (12) such that in a usage position it fluidically connects the feed line (5) and the drainage line (7) and in a rest position it remains without a connection to the feed line (5) or drainage line (7).

4. Fully automatic coffee machine (12) according to one of the preceding claims, **characterised by** means for the manual changeover between the rest position and the usage position.

5. Fully automatic coffee machine (12) according to one of claims 1 to 4, **characterised by** an electric drive for the changeover between the rest position and the usage position.

6. Fully automatic coffee machine (12) according to the preceding claim, **characterised by** a control device for an automatic changeover between rest position and usage position.

7. Fully automatic coffee machine (12) according to the above claims, **characterised by** detection means for the extra element (10) used.

8. Fully automatic coffee machine (12) according to one of claims 1 to 6, **characterised by** switching means, which initiate a decalcification process after the extra element (10) is used.

9. Extra element (10) embodied for use in fully automatic coffee machines (12) having a removable brewing unit (6), a feed line (5) to the brewing unit (6) and a drainage line (7) from the brewing unit (6) according to one of claims 1 to 8, **characterised by** coupling means embodied for connection to the feed line (5) and to the drainage line (7).

## Revendications

1. Machine à café entièrement automatique (12) avec un réservoir d'eau (1), une pompe, un groupe d'échaudage (6), une conduite d'amenée (5) vers le groupe d'échaudage (6), une conduite de sortie (7) du groupe d'échaudage (6), un écoulement à café (8) et un élément supplémentaire (10) constituant en lieu et place du groupe d'échaudage (6) une liaison fluidique entre la conduite d'amenée (5) vers le groupe d'échaudage (6) et la conduite de sortie (7) du groupe d'échaudage (6), **caractérisée par** des moyens de couplage à l'élément supplémentaire (10) de manière à ce qu'il puisse se coupler à la conduite d'amenée (5) et à la conduite de sortie (7) lorsque le groupe d'échaudage (6) est retiré.

2. Machine à café entièrement automatique (12) selon la revendication 1, **caractérisée par** un dispositif d'accueil pour l'élément supplémentaire (10) dans une carcasse de la machine à café intégralement automatique (12).

3. Machine à café entièrement automatique (12) selon l'une des revendications précédentes, **caractérisée en ce que** l'élément supplémentaire (10) est accueilli de façon déplaçable dans la machine à café entièrement automatique (12) de telle manière qu'il relie fluidiquement la conduite d'amenée (5) et la conduite de sortie (7) dans une position d'utilisation et demeure sans liaison vers la conduite d'amenée (5) et la conduite de sortie (7) dans une position de repos.

4. Machine à café entièrement automatique (12) selon l'une des revendications précédentes, **caractérisée par** des moyens de changement manuel entre la position de repos et la position d'utilisation.

5. Machine à café entièrement automatique (12) selon l'une des revendications 1 à 4, **caractérisée par** un actionnement électrique pour le changement entre la position de repos et la position d'utilisation.

6. Machine à café entièrement automatique (12) selon la revendication précédente, **caractérisée par** un dispositif de commande pour un changement automatique entre la position de repos et la position d'utilisation.

7. Machine à café entièrement automatique (12) selon l'une des revendications précédentes, **caractérisée par** un moyen de détection pour l'élément supplémentaire utilisé (10).

8. Machine à café entièrement automatique (12) selon l'une des revendications 1 à 6, **caractérisé par** des moyens de commutation qui lancent un processus de détartrage après la mise en place de l'élément supplémentaire (10).

9. Élément supplémentaire (10) exécuté afin d'être utilisé dans des machines à café entièrement automatiques (12) avec un groupe d'échaudage amovible (6), une conduite d'amenée (5) vers le groupe d'échaudage (6) et une conduite de sortie (7) du groupe d'échaudage (6) selon l'une des revendications 1 à 8, **caractérisé par** des moyens de couplage exécutés en vue d'une liaison avec la conduite d'amenée (5) et la conduite de sortie (7).
